# EUROPEAN PATENT APPLICATION

(11) **EP 2 450 590 A1**
(43) Date of publication of application: **09.05.2012**
(21) Application number: 11150598.8
(22) Date of filing: 11.01.2011
(51) Int. Cl.: F16D 65/14, F16D 65/095, F16D 55/228, F16D 55/00

(54) **Caliper disc brake**

(30) Priority: 12.10.2010 US 924948
(71) Applicant: Ausco Products, Inc., Benton Harbor, MI 49022-8787 (US)
(72) Inventor: Dennis, Brian P., Kalamazoo, MI 49009 (US)
(74) Representative: Jennings, Michael John

(57) **Abstract**

A caliper brake (10) including a pair of opposed service stators (38,40) and a hydraulic service piston (30) positioned adjacent to each service stator. The caliper brake also includes a pair of opposed parking stators (74,76) and a spring applied hydraulic release parking piston (62) positioned adjacent to each parking stator. The service stators and the parking stators are independently movable to apply a braking force to a rotor positioned therebetween. The service stators and parking stators may be positioned on first, second and third torque pins (52,54,88), and may share one of the torque pins.

## Description

### TECHNICAL FIELD

This invention relates to a caliper brake. More particularly, this invention relates to a caliper brake that includes a service brake mechanism and a parking brake mechanism in a single brake assembly.

### BACKGROUND ART

Many vehicles require both a service brake to bring the vehicle to a stop when it is moving, and a parking brake to ensure that the vehicle maintains stationary when parked. Separate actuation mechanisms are typically provided for the service and parking brakes, and the brakes themselves may be provided separately or in a single assembly. One type of brake often used on off-road vehicles to provide both the service braking function and the park braking function is a hydraulically actuated caliper brake.

There are several types of caliper brakes conventionally used in off-road vehicles. One type uses a hydraulically actuated service caliper brake with a separate parking brake. The parking brake may be mechanically actuated, spring applied-hydraulic release, or it may be an enclosed brake such as those integrated into a transmission. The advantage with separate service and parking brakes is that the parking brake is not affected by wear to the service brake. Thus, there is no need for frequent adjustments of the parking brake to account for worn brake pads, as is typical of the prior art. The significant disadvantage of separate service and parking brakes is the cost associated with providing two independent brake assemblies.

Another type of caliper brake often used on off-road vehicles is a hydraulically actuated service brake with a mechanical parking brake actuation mechanism built into the caliper brake. In these brakes, a single pair of brake pads apply both the service and parking brake function, but are actuated by separate service and parking brake actuation mechanisms. Use of the brake pads for the service brake causes more rapid deterioration of the brake pad than use of the brake pads for the parking brake. As the brake pads are wore down by use as a service brake, the parking brake actuation mechanism must be adjusted to account for the wear to the brake pads. Therefore, many designs for these brakes include self-adjusters. These self adjusters are expensive and unreliable due to their many intricate and delicate parts.

Another disadvantage associated with these combined service and parking brakes is that the parking brake must be manually actuated. In addition, where a single set of brake pads are used to provide both the service and parking brake function, only a single lining material is provided for the dual function. This is undesirable because the lining materials used for service brakes are not always the best choice for parking applications.

Thus, there is a need for an improved caliper brake that provides both service and parking braking for a vehicle and alleviates one or more of the above mentioned deficiencies of the prior art.

### DISCLOSURE OF THE INVENTION

One aspect of the present invention provides a caliper brake that provides both a service braking force and a parking braking force.

Another aspect of the present invention provides a caliper brake, as above, having a pair of service stator pads and a pair of parking stator pads.

Another aspect of the present invention provides a caliper brake, as above, including spring applied hydraulic release cylinders to actuate the parking stator pads.

Other aspects and embodiments of the present invention, as well as the advantages thereof over existing prior art forms, are described below.

In one aspect of the invention, a caliper brake includes opposed service stators and a hydraulic service piston positioned adjacent to each service stator. The caliper brake also includes opposed parking stators and a spring applied hydraulic release parking piston positioned adjacent to each parking stator. The service stators and the parking stators of the caliper brake are independently movable to apply a braking force.

In accordance with another aspect of the present invention, a caliper brake includes a housing having a first half, a second half, a bridge connecting the first half and second half, and an opening opposite the bridge and between the first and second halves. The brake also includes first, second and third torque pins laterally spaced and substantially parallel to one another and traversing the opening of the housing. Opposed service stators are carried by the first and second torque pins and opposed parking stators are carried by the second and third torque pins.

In accordance with a further aspect of the present invention, a caliper brake includes a housing having a first half, a second half, a bridge connecting the first half and second half, and an opening opposite the bridge and between the first and second halves. The caliper brake also includes first, second and third torque pins laterally spaced and substantially parallel to one another and traversing the opening of the housing. Opposed service stators are carried by the first and second torque pins and opposed parking stators are carried by the second and third torque pins. The service stators and the parking stators each have a backplate with opposing ears and a stator pad, each of the ears having a hole therethrough. The holes in the ears receive one of the first, second, or third torque pins therethrough. The caliper brake also includes a service bore in each housing half adjacent the service stators, and a parking bore in each housing half adjacent the parking stators. A hydraulic service piston is positioned within each service bore, and a spring applied hydraulic release parking piston is positioned within each parking bore.

A preferred exemplary caliper brake according to the concepts of the present invention is shown by way of example in the accompanying drawings without attempting to show all the various forms and modifications in which the invention might be embodied, the invention being measured by the appended claims and not by the details of the specification.

### BRIEF DESCRIPTION OF THE DRAWINGS

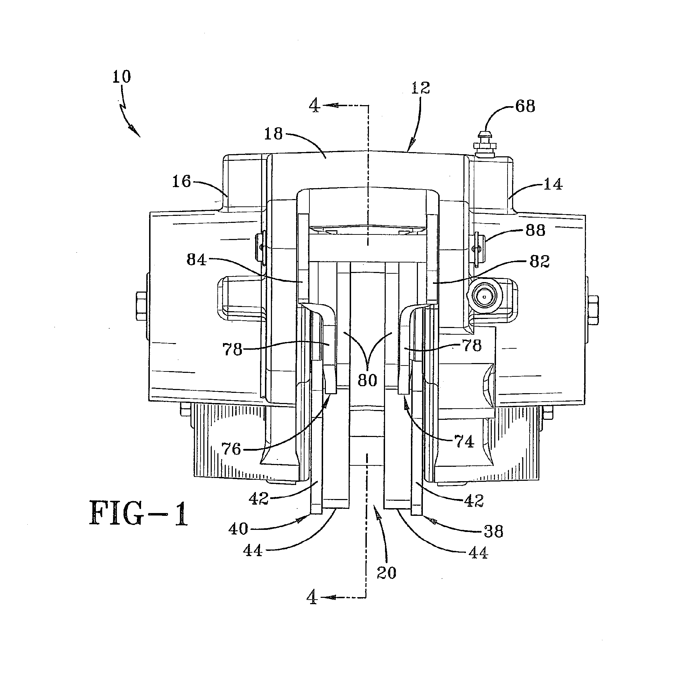

Fig. 1 is an end elevational view of a caliper brake according to the concepts of the present invention.

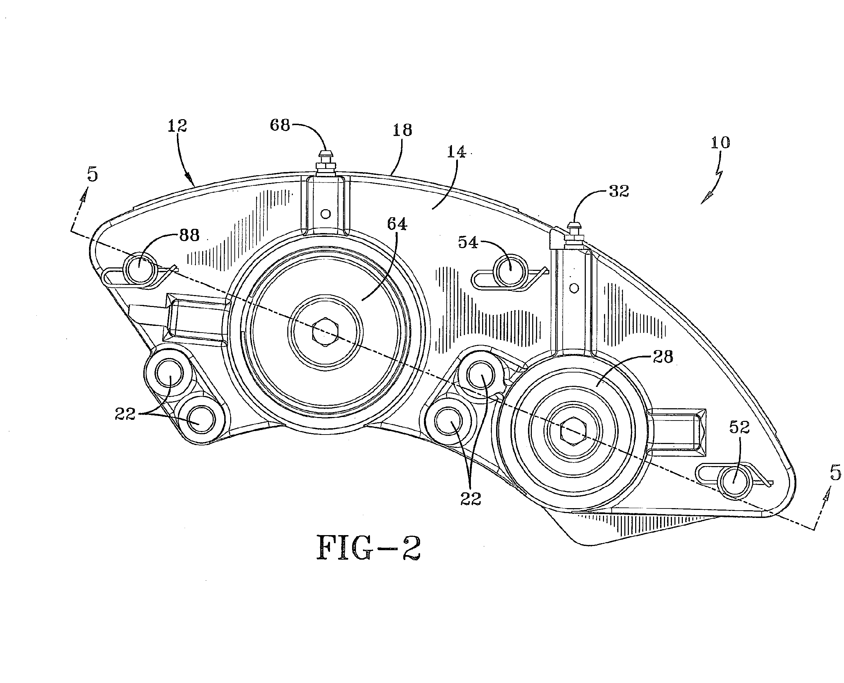

Fig. 2 is a side elevational view of the caliper brake of the present invention.

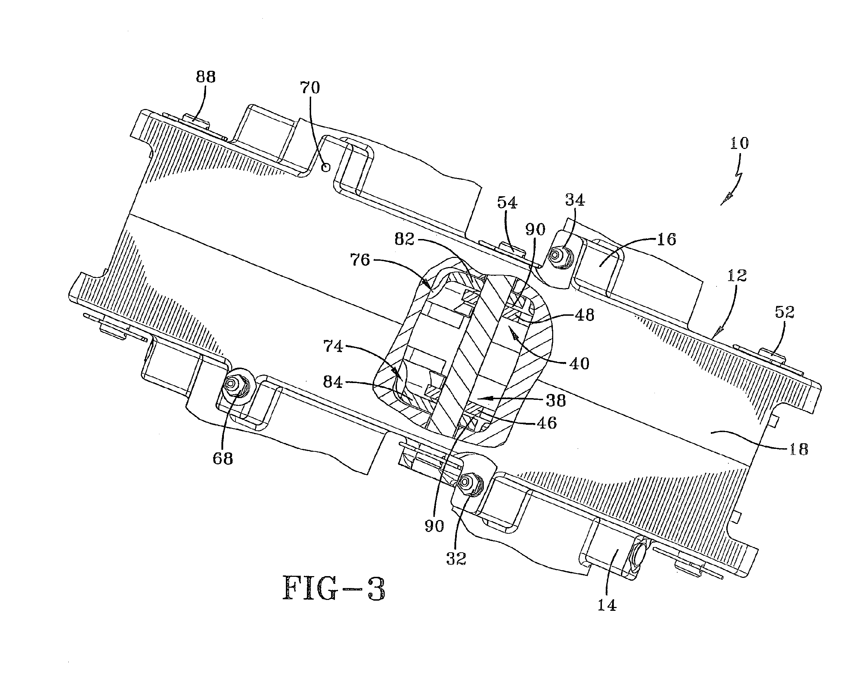

Fig. 3 is a top plan view of the caliper brake partially broken away to show the center torque pin.

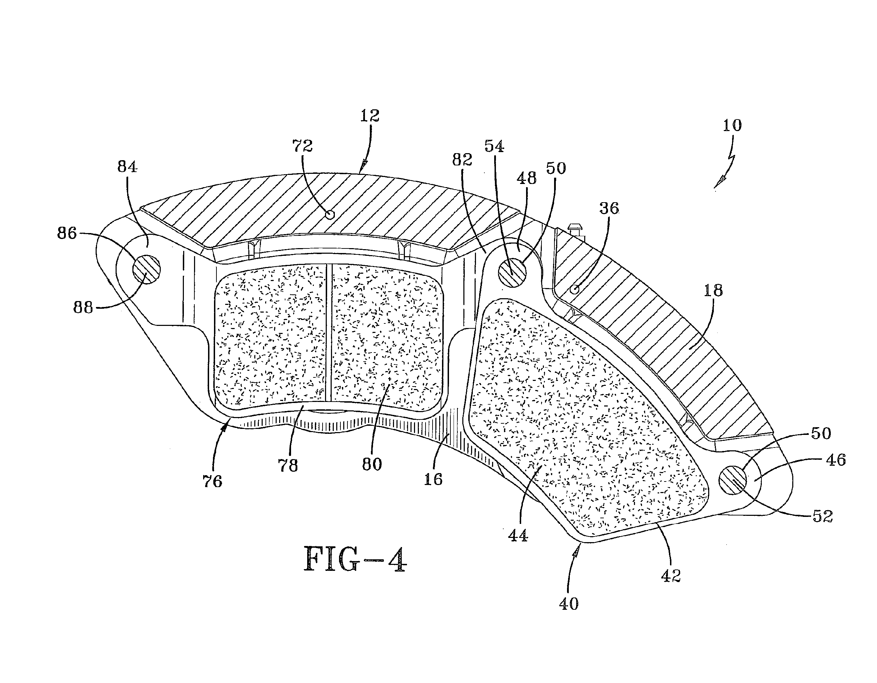

Fig. 4 is a sectional view of the caliper brake taken substantially along line 4—4 of Fig. 1.

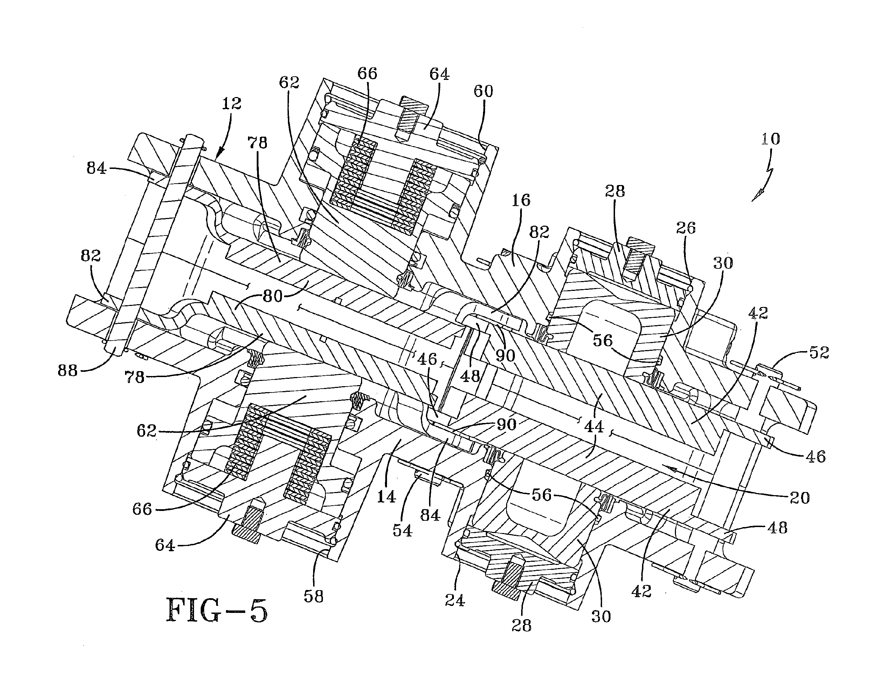

Fig. 5 is a sectional view of the caliper brake taken substantially along line 5—5 of Fig. 2.

### PREFERRED EMBODIMENT FOR CARRYING OUT THE INVENTION

A caliper brake made in accordance with the present invention is indicated generally by the numeral 10. Caliper brake 10 includes a housing 12 having a first half 14, a second half 16. A bridge 18 connects the first half 14 and the second half 16 at one end. Thus, housing 12 is generally U-shaped and includes an opening 20 between first half 14 and second half 16.

Housing 12 acts to enclose and support the components of caliper brake 10, and also provides a mounting mechanism for securing the brake 10 to a vehicle. A plurality of mounting bolts 22 are provided in holes in one half of housing 12 and are adapted to secure the caliper brake 10 to a mounting surface. While brake 10 may be mounted to any surface so as to position it over a rotating rotor, it is contemplated that caliper brake 10 may be secured to a mounting surface located either on an axle or transmission of the vehicle. In a particular embodiment, the brake may be bolted to a mounting surface located at the pinion housing at the axle input of the vehicle. In another embodiment, caliper brake 10 may be mounted to the output side of a transmission housing of the vehicle.

Opposed service bores 24, 26 are provided in first half 14 and second half 16 of housing 12, respectively. Service bores 24 and 26 are positioned coaxially on opposite sides of opening 20. An end cap 28 is provided in each service bore 24 and 26 adjacent to the exterior of housing 12. A service piston 30 is slidably positioned within each service bore 24 and 26 with an end positioned adjacent to and/or extending into opening 20.

One or more hydraulic ports 32, 34 are provided in housing 12 and are in fluid communication with one of service bores 24 and 26. A fluid passageway 36 extends through bridge 18 and connects service bores 24 and 26. One hydraulic port 32 or 34 is used as an input for hydraulic fluid to actuate both service pistons 30 by way of fluid passageway 36. The other hydraulic port 32 or 34 may be used as a bleeder port when servicing brake 10. Such hydraulically actuated cylinders are well known to those skilled in the art, and will therefore not be discussed in great detail herein.

A pair of service stators 38, 40 are slidably positioned between service pistons 30. Each service stator 38 and 40 includes a backplate 42 that carries a stator pad 44. Backplate 42 includes opposing ears 46 and 48, each having a bore 50 therethrough. Bores 50 of ears 46 and 48 are received over a first torque pin 52 and a second torque pin 54 extending between first and second housing halves 14 and 16 and through opening 20. Thus, service stators 38 and 40 are slidable in the axial direction over first and second torque pins 52 and 54.

Service stators 38 and 40 are positioned so that the stator pads 44 thereof are facing one another. As will be appreciated by those skilled in the art, introduction of pressurized hydraulic fluid into service bores 24 and 26, causes axial movement of service pistons 30 toward one another. This movement of service pistons 30 causes axial movement of service stators 38 and 40 toward one another, thereby engaging a rotor (not shown) therebetween and creating a braking force. A seal 56 is provided at an end of each service piston 30 to prevent leakage of pressurized hydraulic fluid, and also to act as a biasing mechanism to return the service pistons 30 to their unactuated position when the pressurized hydraulic fluid is removed.

Opposed parking bores 58, 60 are provided in first half 14 and second half 16 of housing 12, respectively, similar to service bores 24 and 26. Parking bores 58 and 60 are positioned coaxially on opposed sides of opening 20, and are spaced laterally from service bores 24 and 26. Each parking bore 58, 60 contains a spring applied hydraulic release (SAHR) cylinder, as are known in the art. Each SAHR cylinder includes a parking piston 62 and an end cap 64 positioned adjacent to an exterior of housing 12. At least one spring 66 is positioned between end cap 64 and parking piston 62 to bias the parking piston in an actuated position. The embodiment of caliper brake 10 shown in the Figures includes flat spring washers, but it is contemplated that other known biasing mechanisms may be used, such as, for example, coil springs.

Hydraulic ports 68, 70 are provided in housing 12 and are in fluid communication with one of parking bores 58, 60. A fluid passageway 72 extends through bridge 18 and connects parking bores 58 and 60. One hydraulic port 68 or 70 is used as an input for hydraulic fluid to release both parking pistons 62 by way of fluid passageway 72. The other hydraulic port 68 or 70 may be used as a bleeder port when servicing brake 10.

A pair of parking stators 74, 76 is slidably positioned between parking pistons 62. Each parking stator 74, 76 includes a backplate 78 that carries a stator pad 80. Backplate 78 includes opposing ears 82 and 84, each having a bore 86 therethrough. Bores 86 of ears 82 and 84 are received over second torque pin 64 and a third torque pin 88 extending between first and second housing halves 14 and 16 and through opening 20. Thus, parking stators 74 and 76 are slidable in the axially direction over second and third torque pins 54 and 88.

Parking stators 74 and 76 are positioned so that the stator pads 80 thereof are facing one another. The biasing force applied by spring 66 to parking piston 62 causes parking stators 74 and 76 to be forced toward one another, thereby engaging a rotor therebetween and creating a braking force. Introduction of a pressurized hydraulic fluid into parking bores 58 and 60 overcomes the biasing force applied by spring 66 and forces parking pistons 62 into unactuated positions.

Ears 82 and 84 of parking stators 74 and 76 are axially offset from the rest of backplate 78. Each stator pad 80 is therefore positioned axially forward of the location of ears 82 and 84 on torque pins 54 and 88. This offset of ears 82 and 84 allows parking stators 74 and 76 to be positioned on second torque pin 54 with the ears 46 and 48 of service stators 38 and 40. A gap 90 is provided between the ears 46 and 48 of service stators 38 and 40 and the ears 82 and 84 of parking stators 74 and 76. This gap 90 permits the parking stators 74 and 76 to be actuated without causing movement of service stators 38 and 40. Thus, service stators 38 and 40 and parking stators 74 and 76 may be actuated independently of one another.

In operation, actuation of a service brake actuation mechanism (not shown) causes pressurized hydraulic fluid to be forced into service bores 24 and 26 through one of hydraulic ports 32 or 34. The pressurized hydraulic fluid causes service pistons 30 to move axially toward one another, thereby causing service stators 38 and 40 to also move toward one another and engage a rotor positioned therebetween. Actuation of the service brake does not cause actuation of the adjacent parking brake because the ears of the service stators are positioned inside the ears of the parking stators on second torgue pin 54. Upon release of the service brake actuating mechanism, the hydraulic fluid retreats from within service bores 24 and 26 and service pistons 30 return to their unactuated position by virtue of elastomeric seal 56.

One of the hydraulic ports 68 or 70 is in fluid communication with the hydraulic system of the vehicle to which caliper brake 10 is attached. Thus, when the vehicle is running, a pressurized hydraulic fluid is provided within parking bores 58 and 60 to overcome the biasing force applied by spring 66. When the vehicle is turned off, the pressurized hydraulic fluid retreats from parking bores 58 and 60, thereby allowing springs 66 to force parking pistons 62 toward one another. Movement of parking pistons 62 toward one another causes parking stators 74 and 76 to also move toward one another, thereby engaging the rotor positioned therebetween and taking up the gap 90 between the ears 82 and 84 of parking stators 74 and 76 and the ears 46 and 48 of service stators 38 and 40. In this way, a failsafe parking brake is provided that is automatically actuated upon vehicle shut-off.

By providing separate service and parking stators 38, 40, 74 and 76 the stator pad material of each may be optimized to provide improved performance for each of the service and parking brake functions as compared to combination stators with stator pads chosen to work for both purposes. The optimum material for the service stator pads is not necessarily the best choice for the parking stator pads due to the different applications of the service and parking stators. Regardless of the materials used, the service stator pads 44 will wear more quickly than the parking stator pads 80 under normal operating conditions because they act on a rotating rotor and are subjected to greater forces. As service stator pads 44 wear, the gap 90 between ears 82 and 84 of parking stators 74 and 76 and the ears 46 and 48 of service stators 38 and 40 will increase. This increase in size of gap 90 over the life of the service stators ensures that the parking and service stators remain independently operable.

As will be appreciated by those skilled in the art, the existence of separate stator assemblies for the parking and service brake functions alleviates the need to regularly adjust the parking brake actuating mechanism to accommodate for wear of the service stators. Furthermore, the need for a separate parking brake assembly is alleviated by providing both the service brake and parking brake within the same assembly.

It is thus evident that a caliper brake constructed as described herein accomplishes the objects of the present invention and otherwise substantially improves the art.

## Claims

1. A caliper brake comprising opposed service stators, a hydraulic service piston positioned adjacent to each service stator, opposed parking stators, and a spring applied hydraulic release parking piston positioned adjacent to each parking stator, wherein said service stators and said parking stators are independently movable to apply a braking force.

2. The caliper brake of claim 1, further comprising a housing having a first half, a second half, a bridge connecting said first and second halves, and an opening opposite said bridge and between said first and second halves.

3. The caliper brake of claim 2, wherein each of said first half and said second half include a service bore and a parking bore laterally spaced from said service bore, said service pistons being positioned within said service bores, and said parking pistons being positioned within said parking bores.

4. The caliper brake of claim 3, wherein a first fluid passage is provided in said housing connecting said service bores, and a second fluid passage is provided in said housing connecting said parking bores.

5. The caliper brake of claim 3, wherein said service bores are in fluid communication with one another, and said parking bores are in fluid communication with one another.

6. The caliper brake of claim 1, said service stators and said parking stators each having a backplate and a stator pad, said backplate having opposed ears, and each ear having a hole therethrough.

7. The caliper brake of clam 6, further comprising a first torque pin, a second torque pin laterally spaced from said first torque pin, and a third torque pin laterally spaced from said second torque pin, said first, second and third torque pins being oriented substantially parallel to one another.

8. The caliper brake of claim 7, wherein said service stators are positioned on said first and second torque pins, and said parking stators are positioned on said second and third torque pins.

9. A caliper brake comprising a housing having a first half, a second half, a bridge connecting said first half and second half, and an opening opposite said bridge and between said first and second halves; first, second and third torque pins laterally spaced and substantially parallel to one another and traversing said opening; opposed service stators carried by said first and second torque pins; and opposed parking stators carried by said second and third torque pins.

10. The caliper brake of claim 9, further comprising a service bore in each housing half adjacent said service stators, a parking bore in each housing half adjacent said parking stators, a hydraulic service piston positioned within each service bore, and a spring applied hydraulic release parking piston positioned within each parking bore.

11. The caliper brake of claim 10, further comprising a service fluid passage in said housing connecting said service bores, and a parking fluid passage in said housing connecting said parking bores.

12. The caliper brake of claim 9, said service stators and said parking stators each having a backplate with opposing ears and a stator pad, each of said ears having a hole therethrough, wherein said holes receive one of said first, second, and third torque pins therethrough.

13. The caliper brake of claim 12, wherein said ears of said parking, stators are displaced in a direction opposite said stator pad.

14. The caliper brake of claim 13, wherein said service stator ears are positioned between said parking stator ears on said second torque pin.

15. The caliper brake of claim 14, wherein a gap is provided between said service stator ears and said parking stator ears on said second torque pin.
